# EUROPEAN PATENT SPECIFICATION

(11) **EP 3 576 519 B1**
(45) Date of publication and mention of the grant of the patent: **08.01.2025**
(21) Application number: 18786761.9
(22) Date of filing: 15.10.2018
(51) Int. Cl.: A01G 23/091

(54) **CONTROL UNIT FOR A SAW**
STEUEREINHEIT FÜR EINE SÄGE
UNITÉ DE COMMANDE D'UNE SCIE

(30) Priority: 18.10.2017 SE 1751295
(43) Date of publication of application: 11.12.2019
(73) Proprietor: Eco Log Sweden AB, 826 22 Söderhamn (SE)
(72) Inventor: ARVIDSSON, Hans, 770 13 Grangärde (SE); NILSSON, Johan, 826 22 Söderhamn (SE); SÄTERDAL, Patrik, 826 22 Söderhamn (SE)
(74) Representative: AWA Sweden AB
(86) International application number: PCT/EP2018/078000
(87) International publication number: WO 2019/076787

(56) References cited:
- WO-A1-03/061899
- WO-A1-99/12410
- US-A- 4 942 795
- US-A1- 2003 097 917
- US-A1- 2016 010 664

## Description

### Technical field

The present invention relates to the field of systems for logging, and specifically a control unit for a saw in a sawing system for logging and a method for controlling a saw in a system for logging.

### Technical Background

A typical harvester for logging has a hydraulically powered chain saw for cutting trees. Different trees may have different densities, and the settings for one tree may not be optimal for another type of tree or the same type of tree at a different weather. For example, trees may be more difficult to saw during winter, when the wood is dry and hard, and easier to saw during spring when it is warmer and the trees have more sap.

The harvesters may need to be configured for each type of tree, with respect to a number of parameters to optimize the efficiency. Such parameters may, for example, be saw chain speed, the type of wood, season, weather, chain quality, etc. However, most commonly, the harvesters are configured once, and then used with the same parameters even if the environment changes. That is, most harvesters are used with a less than optimal configuration as the configuration may not be updated as often as needed.

It should be noted that industry safety standards are provided for harvesters. For example, there is a standard for maximum chain speed, ISO 11837, limiting the maximum chain speed to 40 m/s. This limitation may decrease the efficiency of the harvester to less than maximum.

Hence, there is a need for an improved harvester with better efficiency, which may utilize a maximum chain speed.

DE7032129 relates to a chain saw, wherein the chain of the saw blade is driven by a motor. The chain saw is driven as a function of the maximum allowed performance of the drive motor of the chain saw.

WO 99/12410 A1 relates to a sawing machine comprising a saw chain and a hydraulic system including a sensor for measuring the hydraulic pressure.

US20160146226 relates to a felling saw recovery control, wherein the associated motor should be operated at a target speed.

However, the prior art documents referred to are not able to provide the above-mentioned desired performance of a harvester.

### Summary

An object of the present disclosure is therefore to mitigate at least some of the drawbacks described above. To achieve this, a control unit for controlling a saw in a harvester according to claim 1 and a method for controlling a saw in a harvester according to claim 10 are provided. Further embodiments are defined in the dependent claims.

Hence, according to a first aspect of the present invention, a control unit for controlling a saw in a harvester is provided. The saw is driven by a first hydraulic system and the saw is adapted to apply a saw pressure on a sawing area during sawing. The control unit comprises a sensor for measuring a pump pressure of the first hydraulic system. The control unit is configured to, in response to the pump pressure being above a first predetermined value, decrease the saw pressure applied by the saw during sawing, or, in response to the pump pressure being below a second predetermined value, increase the saw pressure applied by the saw during sawing, wherein the saw is operated by an actuator. The control unit is further adapted to control a pressure in a second hydraulic system driving the actuator. The control unit is configured to monitor a first pump pressure in the first hydraulic system during a sawing cycle and to control the actuator during a subsequent sawing cycle based on the first pump pressure.

According to a second aspect of the present invention, there is provided a method for controlling a saw in a harvester. The saw is driven by a first hydraulic system and the saw is adapted to apply a saw pressure on a sawing area during sawing. The method comprises the step of obtaining a pump pressure from a pump of the first hydraulic system. The method further comprises to, in response to the pump pressure being above a first predetermined value, decrease the saw pressure applied by the saw during sawing, or, in response to the pump pressure being below a second predetermined value, increase the saw pressure applied by the saw during sawing. The method further comprises the steps of operating the saw by an actuator, and controlling a pressure in a second hydraulic system driving the actuator, monitoring a first pump pressure in the first hydraulic system during a sawing cycle, and controlling the actuator during a subsequent sawing cycle based on the first pump pressure.

In this way, the control unit may control a pressure applied by the saw during its operation. During an operation of the saw, the load applied on the saw by the material may depend on one or more sawing conditions. For example, the orientation of the saw during operation, the properties of the material to be sawed, the speed of the saw through the material to be sawed, etc., may influence the saw. It will be appreciated that an overload of the saw by applying too much pressure against the sawing area during operation may be avoided by the present invention, as the control unit may estimate the load applied on for the saw and decrease the pressure on the sawing area.

This may be beneficial, for example, if the tree is more difficult to saw through than the saw is configured for.

For example, the control unit may control the operation of the saw in case the material (e.g. wood) is easier or harder to saw through than what the saw is configured for. The control unit may sense a pressure of the system that is lower (or higher) than a first (or second) predetermined value, and then increase (or decrease) the saw pressure of the saw on the sawing area. The present invention is highly beneficial in that the control unit may adapt the operation of the saw such that the sawing may be performed at an efficiency, or at least close to a maximum efficiency, without overloading the hydraulic system powering the saw.

Sawing systems according to the prior art may try to keep the saw at a maximum speed for the saw. However, an operation of this kind may lead to power loss or malfunctions in the system, e.g. due to an overload of the hydraulics of the system. The purpose of the sawing systems of the prior art is to avoid that the motor is overloaded, being a completely different concept than that of the subject-matter of the present application of performing the control based on the pump pressure of the pump for not overloading the pump and/or keeping a maximum power of the pump during the operation of the saw. Notably, for many systems according to the prior art, it is assumed that the energy source can deliver more power than the motor can handle. In contrast, the purpose of the subject-matter of the present application is that the control unit controls the pump, and the motor (only) performs the work which the pump can deliver. More specifically, the prior art does not teach, nor suggest, any sensor for measuring a pump pressure of the first hydraulic system and a control unit which is configured to, in response to the pump pressure being above a first predetermined value, decrease the saw pressure applied by the saw during sawing or in response to the pump pressure being below a second predetermined value, increase the saw pressure applied by the saw during sawing. Instead, it should be noted that the kind of arrangements found in the prior art merely try to keep the saw at a maximum speed.

It has been realized that the saw may be operated even in a case of a relatively high load applied on the saw, if the pressure applied by the saw on the sawing area is adapted to accordingly, so that overloading the saw may be avoided. It should be noted that the effect of a driving hydraulic system is limited, and that the work applied by the saw affects the driving hydraulic system. By the control unit and method of the present disclosure, a maximum sawing effect may be obtained while at the same time utilizing the hydraulic system at a maximum (or close to maximum) effect. This may be achieved by adapting the sawing pressure based on the pump pressure of the hydraulic system, i.e. adapting the sawing operation based on the load the pump is subjected to. The control unit may decrease or increase the pressure applied by the saw during sawing in accordance with the measured pump pressure. The decrease or increase of the pressure applied by the saw during sawing via the control unit may be implemented by monitoring a pump pressure of a pump driving a hydraulic system for powering the saw. In this way the load on the saw may be estimated and monitored. An increase in the pump pressure of the hydraulic system may indicate that the saw cannot be operated to a maximum extent and that the saw may be overloaded, or may be close to be overloaded. Similarly, a decrease in the pump pressure may indicate that the saw may use more power without being overloaded. In this way, the sawing may be controlled to be operated at a maximum sawing speed or pressure, or at least close to a maximum sawing speed or pressure, without overloading the saw, and thereby the hydraulic system.

As the saw is driven by the hydraulic system, the pressure may increase when the pressure applied by the saw is increased. When the pressure in the system exceeds, or is close to exceed, the maximum pressure of the system, the pump in the hydraulic system may be overloaded and may stop providing a flow in the hydraulic system. That is, when the saw is overloaded, the system driving the saw may also be overloaded. The control unit may control the pressure applied by the saw during sawing to stay close to a maximum sawing pressure and speed, without overloading the saw. In this way, the risk of the system being overloaded may be decreased, while utilizing the maximum effect of the hydraulic system.

To reach the maximum effect or performance of the sawing system, the pressure in the hydraulic system may be kept close to a pressure maximum. This provides a flow close to a maximum flow of the system that may be used during sawing to control the sawing speed of the saw. Having a close to maximum pressure and a close to maximum flow in the hydraulic system provides for utilizing the saw at a close to maximum performance, for example, by decreasing the sawing time. Utilizing the saw at a close to maximum performance may also decrease the risk of problems related to a slower operation of the saw, such as a risk for end splits, lowered performance (i.e. cut time), higher risk for operators of the saw, etc.

In previous sawing systems for harvesters, the sawing needed to be programmed and controlled based on a specific set of parameters, such as the type of tree intended for sawing or the saw itself. In contrast, with this control unit, the optimal performance of the saw may be determined during sawing by monitoring the pump pressure. That is, the sawing may be adaptive to the current environment, and does not have to be based on a previously set configuration.

In this way, the pressure applied by the saw may be adapted to the capacity of the hydraulic system, not just the saw, as the pressure applied by the saw is based on the pump pressure.

It will be appreciated that the term "saw" may refer to any type of saw configured to be driven by a hydraulic system. For example, but not limited to, the saw may be a chain saw driven by a flow of the hydraulic system, or a circular saw or a band saw.

The saw may have a sawing member, i.e. a member or portion moving to saw through, for example, a tree. The saw may also have a sawing direction, i.e. a direction through, for example, the tree or item the saw is to saw through. The term "sawing area" is therefore to be interpreted as the area on which the saw saws with the sawing or rotating member through the item. Further, the term "sawing speed" or "movement speed" of the saw is to be interpreted as the speed of the saw in the sawing direction, i.e. in a direction through the tree or log. A "saw pressure applied by the saw during sawing" is to be interpreted as related to the speed of the saw in the sawing direction, thereby applying a force or a pressure on the sawing area. Accordingly, it should be noted that by the expression "the saw being adapted to apply a saw pressure on a sawing area during sawing", the saw is applied to a sawing area (e.g. of the wood) during sawing, the saw is accordingly and consequently adapted/configured to apply a saw pressure on this sawing area.

The term "hydraulic system" may be interpreted as any hydraulic system suitable for driving or powering a saw. It may be a load-sensing hydraulic system. Typically, hydraulic systems comprise a pump and a hydraulic valve for determining or altering the current flow or pressure in the system.

By "pump pressure" it is meant the pressure created by the pump, i.e. the pressure downstream from the pump and upstream from the saw.

The sensor may be any device or sensor capable of measuring or determine a pressure in the hydraulic system.

By "predetermined value", it is here meant a desired value and/or reference value.

It will be appreciated that the "first predetermined value" and the "second predetermined value" may be related. For example, the second predetermined value may be within an interval from the first predetermined value. Alternatively, they may be equal. It will also be appreciated that the control unit may determine that a measured value is higher or lower than the first predetermined value or the second predetermined values based on it being within an interval from the values.

It will be appreciated that by the wording that the control unit is configured to decrease or increase the pressure applied by the saw during sawing, it is understood that substantially any unit(s), element(s), system(s) or the like, e.g. comprising one or more actuator(s) and/or hydraulic systems, may be connected or coupled between the control unit and the saw.

According to an embodiment, the control unit may be configured to monitor the pump pressure in the first hydraulic system periodically or continuously. The monitoring may be performed by periodical measurements by the sensor at any suitable time interval. For continuous monitoring the time periods may be relatively small.

In this way, the control unit may relatively quickly adapt the pressure according to the monitored pump pressure. This may lead to a more efficient system as the pressure applied by the saw during sawing may be quickly adapted to changes in the environment that makes it easier or more difficult to saw. This further allows for improving the efficiency of the sawing while decreasing the risk for overloading the saw.

According to an embodiment, the control unit may be configured to output a control signal for controlling the saw pressure applied by the saw during sawing. For example, the control unit may be configured to output a control signal on a CAN-bus.

The embodiment is advantageous in that the control unit may control a pressure applied by the saw during sawing based on the control signal.

According to an embodiment, the saw is inclinably arranged in the system, and the increase or decrease of the pressure applied by the saw during sawing is further based on an inclination of the saw.

This allows for adapting the pressure applied on the saw based on the type of sawing performed, i.e. the inclination of the saw. Typically, the saw may be inclined downwards during cutting of a tree trunk, and inclined upwards during felling of a tree. These types of harvesting may require different pressures applied by the saw on the sawing area.

According to an embodiment, the system is intended for sawing of wood, and the increase or decrease of the pressure applied by the saw during sawing is further based on at least one property of the wood. For example, the control unit may be configured to cut a specific type of wood or tree and adapt the pressure applied by the saw accordingly.

The saw is operated by an actuator. The actuator is hydraulically driven and the control unit is adapted to control the actuator. The control unit may be further adapted to control a pressure in a second hydraulic system driving the actuator.

By controlling the actuator operating the saw, the saw may continue to operate the sawing at maximum speed, and the pressure applied by the saw on a sawing area may be controlled by the actuator.

According to the invention, the control unit is configured to monitor a first pump pressure in the first hydraulic system during a sawing cycle and to control the actuator during a subsequent sawing cycle based on the first pump pressure.

In this way, the controlling of a subsequent sawing cycle may be influenced by data from a previous sawing cycle. This may be beneficial as the sawing characteristics between sawing cycles may be similar. For example, a subsequent sawing cycle may be performed for the same or a similar type of wood at the same or a similar temperature as the previous sawing cycle.

In an example, but not limited to, the starting pressure applied by the saw on the sawing area for a subsequent sawing cycle may be determined based on the monitored sawing cycle. In this way, the sawing cycle may start at a pressure which is based on a previous sawing cycle, and thereby reduce the risk of any misconfiguration in the beginning of the sawing cycle. This may lead to a more efficient sawing cycle.

According to an embodiment, the control unit is comprised in a sawing system. The sawing system further comprises a saw, a first hydraulic system for driving the saw, an actuator for operating the saw, and a control unit according to any embodiment for controlling the actuator. The system may, for example, be configured to be arranged on a harvester or on another vehicle or machine where a sawing system is needed.

According to an embodiment, the saw is a chain saw. The chain saw may comprise a saw sword and a rotating member comprising the chain, wherein the rotating member rotates around the saw sword. The rotating member may be driven by the hydraulic system. The pressure in the hydraulic system may increase when a pressure applied on the rotating member is increased, since the chain may move more slowly through the material that is being cut. Correspondingly, the pressure in the hydraulic system may decrease when the pressure applied on the rotating member is decreased, as the chain may move faster through the material that is sawed.

According to an embodiment, the system further comprises a second hydraulic system, wherein the actuator is driven by the second hydraulic system. The hydraulic system may cause movements of the actuator depending on a pressure from the hydraulic system to the actuator.

The actuator may alternatively be driven by an electrical system or another type of system suitable for driving the actuator.

According to an embodiment, the second hydraulic system is the same as the first hydraulic system.

In this way, only one hydraulic system is needed for the operation of the saw, including the sawing member. Further, as many already existing systems have one hydraulic system, the control unit may be relatively easily installed in an existing system.

According to an embodiment, the second hydraulic system comprises a valve for controlling a pressure in the second hydraulic system. In this way, the pressure applied by the saw during sawing, as controlled by the actuator, may be controlled by the control unit via the valve.

Further objectives of, features of, and advantages with the present inventive concept will become apparent when studying the following detailed disclosure, the drawings and the appended claims. Those skilled in the art will realize that different features of the present inventive concept can be combined to create embodiments other than those described in the following.

### Brief description of drawings

The above, as well as additional objects, features and advantages of the present inventive concept, will be better understood through the following illustrative and non-limiting detailed description of preferred embodiments of the present inventive concept, with reference to the appended drawings. In the drawings like reference numeral will be used of like elements unless stated otherwise.
Figure 1 shows a schematic view of sawing system;
Figure 2 shows a chart illustrating the control process for the control unit;
Figure 3 shows a schematic view of a harvester comprising a sawing system;

All the figures are schematic, not necessarily to scale, and generally only show parts which are necessary in order to elucidate the embodiments, wherein other parts may be omitted.

### Detailed Description

Detailed embodiments of the present inventive concept will now be described with reference to the drawings. The present inventive concept may, however, be embodied in many different forms and should not be construed as limited to the embodiments set forth herein; rather, these embodiments are provided by way of example so that this disclosure will convey the scope of the inventive concept to those skilled in the art.

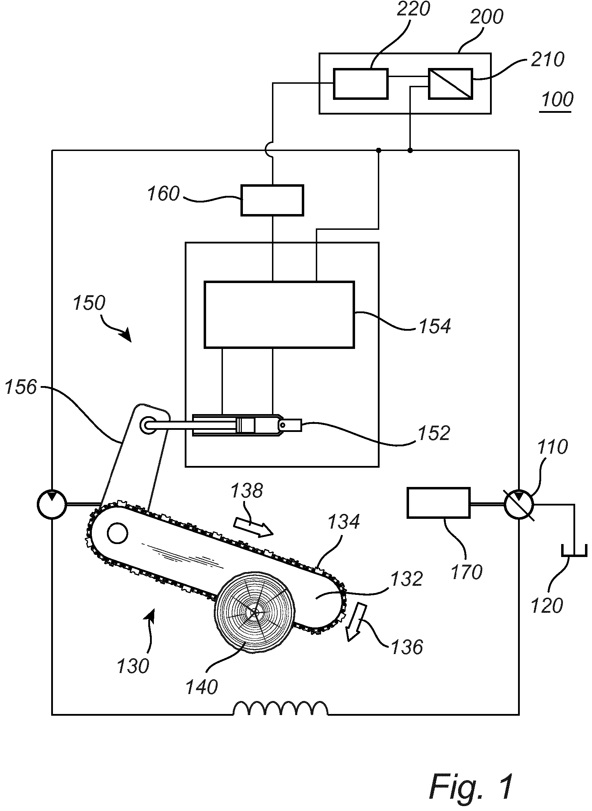

Embodiments of the present inventive concept generally relate to a control unit 200 for controlling a saw 130 in a sawing system as shown in Figure 1. The saw 130 is driven by a hydraulic system 100. Such hydraulic systems 100 generally comprise a pump 110, a tank 120 and a motor for driving the pump 170. The pump 110 may be a fixed displacement pump or a pump with a variable displacement. The motor may be any type of motor suitable for driving a pump, for example a combustion engine such as a diesel motor or an electrical motor.

The saw 130 is in this example a chain saw. The saw 130 comprises a saw sword 132 and a rotating member 134. The rotating member 134 may be a saw chain. The rotating member 134 may be driven by the hydraulic system 100. The rotating member 134 has a rotational direction 138. The sawing system further comprises an actuator 156, a cylinder 152 and a second hydraulic system 150 for operating the saw 130. The second hydraulic system 150 may drive the cylinder 152 which acts on the actuator 156. The second hydraulic system 150, the cylinder 152 and the actuator 156 may be comprised in an actuator unit for operating the saw 130. The saw sword 132 has a sawing direction 136.

Alternatively, the saw 130 may be a band saw, a circular saw or another type of saw suitable for cutting wood 140 and configured to be driven by a hydraulic system.

The sawing system further comprises a control unit 200. The control unit 200 has a sensor 210 for measuring a pump pressure of the pump 110. The control unit 200 may also comprise a processing unit 220 to which the measured pump pressure may be communicated. The processing unit 220 may perform any calculations in the control unit 200.

The control unit 200 may detect that the saw 130 or saw system 100 is working at a workload of the saw 130 which is close to, or even above, a maximum workload, based on the measured pump pressure being above a first predetermined level. The first predetermined level may, for example, be related to the maximum pump pressure for the pump 110. Alternatively, the first predetermined level may be related to other components in the sawing system or driven by the hydraulic system 100. In response to the measured pump pressure being above the first predetermined level, the control unit 200 may output a control signal for decreasing the pressure applied by the saw 130 on the sawing area. The control unit 200 may alternatively determine that the saw 130 or the sawing system 100 is not working at a workload close to or above the first predetermined level based on the measured pump pressure being below a second predetermined level. In response to the measured pump pressure being below the second predetermined level, the processing unit 220 may output a control signal for increasing the pressure applied by the saw 130 on the sawing area.

The control unit 200 may output the control signal indicating a pressure to be applied by the saw on a sawing area, or a change in the pressure to be applied, via a CAN-bus 160. It should be noted that any type of communication means may be used instead of the CAN-bus 160.

The control unit 200 may periodically or continuously monitor the pump pressure. For example, the sensor may measure the pressure every 0.1 seconds, 1 seconds, 2 second or at any other suitable time interval. For continuous monitoring, the time period may be relatively small.

The harvesting system 100 may further comprise a second hydraulic system 150 for operating the saw 130. The second hydraulic system 150 may comprise a control unit 154 and a hydraulic actuator 152 for operating the actuator 156.

The actuator unit may receive the control signal sent from the control unit 200 via the CAN-bus 160. The actuator unit may control the movements of the saw 130 in the sawing direction 136 according to the control signal sent from the control unit. For example, the actuator unit may move the saw 130 faster in the sawing direction 136 to increase the pressure or move the saw 130 at slower in the sawing direction 136 to decrease the pressure.

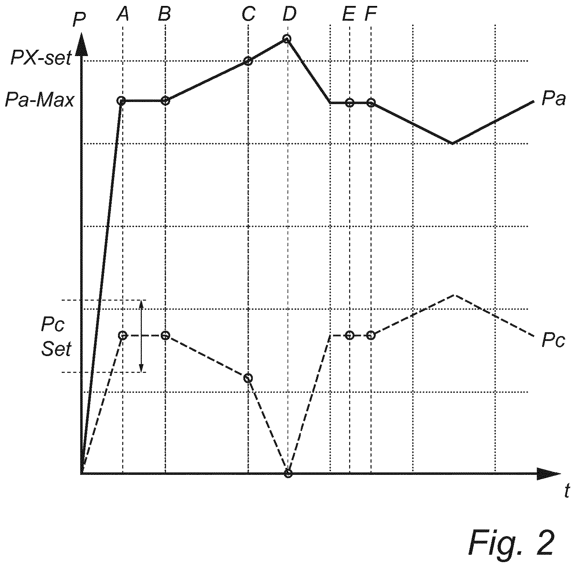

An example for the control process for the control unit 200 is now described with reference to Figure 2. Figure 2 shows two graphs, wherein Pa indicates a measured pump pressure over time and Pc indicates a value of the control signal sent by the control unit. More specifically, Pc indicates a pressure applied by the saw on a sawing area during sawing in response to the measured pressure Pa.

As the pump starts in the example illustrated in Figure 2, both of Pa and Pc start at low values. The pump pressure is thereafter brought to its maximum working level, wherein Pa = Pa-max. The control unit may, in response to the pump pressure reaching maximum working level, set Pc at its preferred level, Pc Set. At point B the measured pump pressure increases, which may be due to the start of sawing or another external event. In response to an increase in the pump pressure, the control unit may determine a steering signal Pc indicating a decrease in the pressure applied by the saw. At point C the control unit may determine another, lower steering signal Pc since the increase in pump pressure has not yet declined. At point D in time, the pump pressure starts to decline, and the control unit determines a steering signal Pc indicating an increase in the pressure applied by the saw during sawing. At point E the control unit may determine to keep the steering signal Pc at the same level as before, as the measured pressure Pa has not recently changed. At point F in time, the measured pump pressure Pa is declining, which may be due to a change of the characteristics of the wood (tree/log) or another external event. The control unit may, in response to the measure pump pressure Pa declining, determine a steering signal Pc that indicates an increase in the pressure applied by the saw during sawing.

There may be different types of sawing performed by the sawing system 100, for example felling and cutting. In those different types of sawing, the inclination of the saw 330 may be different. The control unit 200 may determine the control signal based on the inclination of the saw 330. The inclination may be controlled by an operator operating the sawing system, or it may be pre-programmed based on a current sawing cycle. For example, the control unit 200 may determine a control signal indicating a decrease in the pressure applied by the saw on the sawing are based on a downward inclination, which would commonly be used during cutting. The control unit 200 may determine a control signal indicating an increase in the pressure applied by the saw during sawing based in an upward tilt, which would commonly be used during felling.

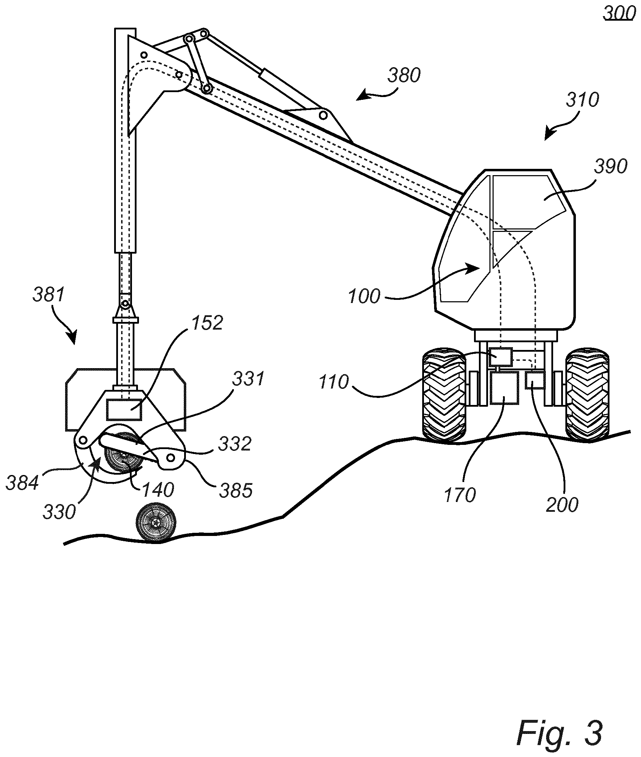

A vehicle which comprises a control unit and a hydraulic system as described above will now be described with reference to Figure 3. Figure 3 shows a schematic view of a sawing system 100 and a control unit 200 comprised in a vehicle 300. The vehicle 300 may be a harvester for logging, but also other applications for the sawing system 100 and the control unit 200 are envisaged. The vehicle 300 comprises a hydraulically driven sawing arm 380, a vehicle body 310 and a cab 390 at the vehicle body 310. An operator may drive the vehicle 300 and operate the arm 380 from within the cab 390.

The vehicle 300 further comprises a sawing head 381 arranged at an end of the crane 380. The sawing head 381 comprises two holding portions 384, 385 and a saw 330. The saw 330, in this example, comprises a saw sword 332 and a rotating member 331. However, other types of saws may be used. The saw 330 is able to move between a folded state, wherein the saw 330 is arranged in the sawing head 381, and between an extended state, wherein a portion of the saw 330 has passed the holding portion 384 in the sawing direction. The holding portions 384, 385 may be arranged around a tree or log 140 to hold the tree 140 or log in place during sawing by the saw 330.

The sawing system further comprises a pump 110 and an engine 170 for driving the pump 110, both arranged at the body 310 of the vehicle 300. The sawing system 100 further comprises an actuator 152 arranged at the sawing head 381 for operating the saw 330. The actuator 152 may be comprised in an actuator unit (not shown in Figure 3).

During a sawing cycle, the crane 380 may be operated by an operator such that the two holding portions 384, 385 are arranged around a tree 140. At the start of a sawing cycle the saw may be arranged in the sawing head 381. The rotating member may rotate around the saw sword by means of the hydraulic system. To start the sawing, the 330 saw may be operated by the actuator to apply a pressure against a sawing area on the tree 140. During sawing the control unit may monitor the pump pressure of the pump 110 and adjust the pressure applied on the sawing area of the tree as described above with reference to Figure 1 and Figure 2.

The person skilled in the art realizes that the present invention by no means is limited to the embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements of steps, and the indefinite article "a" or "an" does not exclude a plurality. The mere fact that certain measures are recited in mutually different dependent claims does not indicate that a combination of these measures cannot me used to advantage.

## Claims

1. A control unit (200) for controlling a saw (130) in a harvester, the saw being driven by a first hydraulic system (100) and the saw being adapted to apply a saw pressure on a sawing area during sawing, wherein the control unit comprises:
a sensor (210) for measuring a pump pressure of the first hydraulic system;
and wherein the control unit is configured to:
in response to the pump pressure being above a first predetermined value, decrease the saw pressure applied by the saw during sawing or
in response to the pump pressure being below a second predetermined value, increase the saw pressure applied by the saw during sawing,
wherein the saw is operated by an actuator (156), and the control unit is further adapted to control a pressure in a second hydraulic system (150) driving the actuator,
**characterised in that**
the control unit is configured to monitor a first pump pressure in the first hydraulic system during a sawing cycle and to control the actuator during a subsequent sawing cycle based on the first pump pressure.

2. A control unit according to claim 1, wherein the control unit is configured to monitor the pump pressure in the first hydraulic system periodically or continuously.

3. A control unit according to any preceding claim, wherein the control unit is configured to output a control signal for controlling the saw pressure applied by the saw during sawing.

4. A control unit according to any preceding claim, wherein the saw is inclinably arranged in the system, and the increase or decrease of the saw pressure applied by the saw during sawing is further based on an inclination of the saw.

5. A control unit according to any preceding claim, wherein the system is intended for sawing of wood, and wherein the increase or decrease of the saw pressure applied by the saw during sawing is further based on at least one property of the wood.

6. A sawing system, comprising:
a saw (330);
a first hydraulic system (100) for driving the saw;
an actuator (152) for operating the saw;
a control unit (200) according to any previous claim for controlling the actuator.

7. The system according to claim 6, wherein the saw is a chain saw.

8. The system according to claim 6 or 7, wherein the second hydraulic system is the same as the first hydraulic system.

9. The system according to claim 6 or 7, wherein the second hydraulic system comprises a valve for controlling a pressure in the second hydraulic system.

10. A method for controlling a saw in a harvester, the saw being driven by a first hydraulic system and the saw being adapted to apply a saw pressure on a sawing area during sawing, the method comprising the steps of:
obtaining a pump pressure from a pump of the first hydraulic system; and
in response to the pump pressure being above a predetermined value, decreasing the saw pressure applied by the saw during sawing; or
in response to the pump pressure being below a predetermined value, increasing the saw pressure applied by the saw during sawing,
operating the saw by an actuator, and controlling a pressure in a second hydraulic system driving the actuator,
monitoring a first pump pressure in the first hydraulic system during a sawing cycle, and controlling the actuator during a subsequent sawing cycle based on the first pump pressure.

## Patentansprüche

1. Steuereinheit (200) zum Steuern einer Säge (130) in einer Erntemaschine, wobei die Säge durch ein erstes hydraulisches System (100) angetrieben wird und die Säge dazu ausgelegt ist, während des Sägens einen Sägedruck auf einen Sägebereich auszuüben, wobei die Steuereinheit Folgendes umfasst:
einen Sensor (210) zum Messen eines Pumpendrucks des ersten hydraulischen Systems;
und wobei die Steuereinheit für Folgendes konfiguriert ist:
in Ansprechen darauf, dass der Pumpendruck über einem ersten vorbestimmten Wert liegt, Verringern des von der Säge während des Sägens ausgeübten Sägedrucks, oder
in Ansprechen darauf, dass der Pumpendruck unter einem zweiten vorbestimmten Wert liegt, Erhöhen des von der Säge während des Sägens ausgeübten Sägedrucks,
wobei die Säge durch einen Aktuator (156) betrieben wird, und die Steuereinheit ferner dazu ausgelegt ist, einen Druck in einem zweiten hydraulischen System (150) zu steuern, das den Aktuator antreibt,
**dadurch gekennzeichnet, dass** die Steuereinheit dazu konfiguriert ist, einen ersten Pumpendruck während eines Sägezyklus in dem ersten hydraulischen System zu überwachen und den Aktuator während eines nachfolgenden Sägezyklus basierend auf dem ersten Pumpendruck zu steuern.

2. Steuereinheit nach Anspruch 1, wobei die Steuereinheit dazu konfiguriert ist, den Pumpendruck in dem ersten hydraulischen System periodisch oder kontinuierlich zu überwachen.

3. Steuereinheit nach einem der vorhergehenden Ansprüche, wobei die Steuereinheit dazu konfiguriert ist, ein Steuersignal zum Steuern des von der Säge während des Sägens ausgeübten Sägedrucks auszugeben.

4. Steuereinheit nach einem der vorhergehenden Ansprüche, wobei die Säge neigbar im System angeordnet ist, und das Erhöhen oder das Verringern des von der Säge während des Sägens ausgeübten Sägedrucks ferner auf einer Neigung der Säge basiert.

5. Steuereinheit nach einem der vorhergehenden Ansprüche, wobei das System zum Sägen von Holz bestimmt ist, und wobei das Erhöhen oder das Verringern des von der Säge während des Sägens ausgeübten Sägedrucks ferner auf mindestens einer Eigenschaft des Holzes basiert.

6. Sägesystem, das Folgendes umfasst:
eine Säge (330);
ein erstes hydraulisches System (100) zum Antreiben der Säge;
einen Aktuator (152) zum Betreiben der Säge;
eine Steuereinheit (200) nach einem der vorhergehenden Ansprüche zum Steuern des Aktuators.

7. System nach Anspruch 6, wobei die Säge eine Kettensäge ist.

8. System nach Anspruch 6 oder 7, wobei das zweite hydraulische System das gleiche ist wie das erste hydraulische System.

9. System nach Anspruch 6 oder 7, wobei das zweite hydraulische System ein Ventil zum Steuern eines Drucks in dem zweiten hydraulischen System umfasst.

10. Verfahren zum Steuern einer Säge in einer Erntemaschine, wobei die Säge durch ein erstes hydraulisches System angetrieben wird und die Säge dazu ausgelegt ist, während des Sägens einen Sägedruck auf einen Sägebereich auszuüben, wobei das Verfahren die folgenden Schritte umfasst:
Erhalten eines Pumpendrucks von einer Pumpe des ersten hydraulischen Systems; und
in Ansprechen darauf, dass der Pumpendruck über einem vorbestimmten Wert liegt, Verringern des von der Säge während des Sägens ausgeübten Sägedrucks; oder
in Ansprechen darauf, dass der Pumpendruck unter einem vorbestimmten Wert liegt, Erhöhen des von der Säge während des Sägens ausgeübten Sägedrucks,
Betreiben der Säge durch einen Aktuator, und Steuern eines Drucks in einem zweiten hydraulischen System, das den Aktuator antreibt,
Überwachen eines ersten Pumpendrucks in dem ersten hydraulischen System während eines Sägezyklus, und Steuern des Aktuators während eines nachfolgenden Sägezyklus basierend auf dem ersten Pumpendruck.

## Revendications

1. Unité de commande (200) pour commander une scie (130) dans une moissonneuse, la scie étant entraînée par un premier système hydraulique (100) et la scie étant adaptée pour appliquer une pression de scie sur une zone de sciage pendant le sciage, dans lequel l'unité de commande comprend :
un capteur (210) pour mesurer une pression de pompe du premier système hydraulique ;
et dans laquelle l'unité de commande est configurée pour :
en réponse à la pression de pompe qui est au-dessus d'une première valeur prédéterminée, baisser la pression de la scie appliquée par la scie pendant le sciage ou
en réponse à la pression de pompe qui est en dessous d'une seconde valeur prédéterminée, augmenter la pression de la scie appliquée par la scie durant le sciage,
dans laquelle la scie est actionnée par un actionneur (156), et l'unité de commande est en outre adaptée pour commander une pression dans un second système hydraulique (150) entraînant l'actionneur,
**caractérisée en ce que**
l'unité de commande est configurée pour surveiller une première pression de pompe dans le premier système hydraulique pendant un cycle de sciage et pour commander l'actionneur pendant un cycle de sciage suivant en se basant sur la première pression de pompe.

2. Unité de commande selon la revendication 1, dans laquelle l'unité de commande est configurée pour surveiller périodiquement ou continuellement la pression de la pompe dans le premier système hydraulique.

3. Unité de commande selon l'une quelconque revendication précédente, dans laquelle l'unité de commande est configurée pour émettre un signal de commande pour commander la pression de la scie appliquée par la scie pendant le sciage.

4. Unité de commande selon l'une quelconque revendication précédente, dans laquelle la scie est agencée dans le système en pouvant être inclinée, et l'augmentation ou la baisse de la pression de la scie appliquée par la scie pendant le sciage est en outre basée sur une inclinaison de la scie.

5. Unité de commande selon l'une quelconque revendication précédente, dans laquelle le système est destiné à scier du bois, et dans laquelle l'augmentation ou la baisse de la pression de la scie appliquée par la scie pendant le sciage est en outre basée sur au moins une propriété du bois.

6. Système de sciage, comprenant :
une scie (330) ;
un premier système hydraulique (100) pour entraîner la scie ;
un actionneur (152) pour actionner la scie ;
une unité de commande (200) selon l'une quelconque revendication précédente pour commander l'actionneur.

7. Système selon la revendication 6, dans lequel la scie est une tronçonneuse.

8. Système selon la revendication 6 ou 7, dans lequel le second système hydraulique est le même que le premier système hydraulique.

9. Système selon la revendication 6 ou 7, dans lequel le second système hydraulique comprend une soupape pour commander une pression dans le second système hydraulique.

10. Procédé pour commander une scie dans une moissonneuse, la scie étant entraînée par un premier système hydraulique et la scie étant adaptée pour appliquer une pression de scie sur une zone de sciage pendant le sciage, le procédé comprenant les étapes de :
obtenir une pression de pompe d'une pompe du premier système hydraulique ; et
en réponse à la pression de pompe qui est au-dessus d'une valeur prédéterminée, baisser la pression de la scie appliquée par la scie pendant le sciage ; ou
en réponse à la pression de pompe qui est en dessous d'une valeur prédéterminée, augmenter la pression de la scie appliquée par la scie durant le sciage,
actionner la scie par un actionneur et commander une pression dans un second système hydraulique entraînant l'actionneur,
surveiller une première pression de pompe dans le premier système hydraulique pendant un cycle de sciage et commander l'actionneur pendant un cycle de sciage suivant en se basant sur la première pression de pompe.
